# EUROPEAN PATENT APPLICATION

(11) **EP 1 124 358 A2**
(43) Date of publication of application: **16.08.2001**
(21) Application number: 01301206.7
(22) Date of filing: 12.02.2001
(51) Int. Cl.: H04L 12/64

(54) **A method of synchronising the replay of audio data in a network of computers**

(30) Priority: 11.02.2000 GB 0003054
(71) Applicant: Purple Voice Limited, Hayes, Middlesex UB3 1HH (GB)
(72) Inventor: Kalian, Ron, Ruislip, Middlesex HA4 7YW (GB); Sharp, Alan Cooper, St Albans, Herts AL3 5EG (GB)
(74) Representative: Sharp, Alan Cooper

(57) **Abstract**

A method of synchronising the replay of audio data sent as data packets in a network of computers is described. The audio data passes from a source station to destination stations within earshot of one another, and each data packet sets out from the source station to respective destination stations at substantially the same time, taking a travel time to reach its destination station. The travel times are distributed over a range of times, and are difficult to predict. The method includes determining the average travel time (or minimum travel time) of a data packet, and providing a delay between the time a given packet is sent and its replay, the delay being adapted such that it corresponds to a predetermined time equal to the average travel time (or minimum travel time) plus a variable time. This results in the synchronisation of audio data replay, because the average travel time (or minimum travel time) is approximately the same for neighbouring destination stations, on average.

## Description

This invention relates to a method of synchronising the replay of audio data in a network of computers.

Concomitant with the increased popularity of the Internet and intranets in recent years, there has been interest in combining digital data transmission with voice and other audio program content, including Internet radio, internet telephony, voice-mail, and unified messaging. In many businesses, such as financial dealing rooms, each person has a networked computer on their desk in addition to a telephone connected to a telecommunications system.

A problem arises with such systems when a message containing audio data is sent simultaneously to a number of such networked computers within earshot of one another. The data is sent over the network as a series of data packets, which are reassembled at the destination computer and replayed. It is in the nature of such networks that the time taken for each data packet to travel over the network will be slightly different, depending on a number of factors such as how busy the network is at that time. Thus neighbouring computers can get their audio replay out of synchronisation, which can be annoying for the listener.

Some of the reasons for a loss of synchronisation are:-
1. Routing Variations - packets from a source (server) to a destination (client) may take different routes across the network, thus resulting in different arrival times at different clients and/or loss of packet order.
2. Timebase Errors (Jitter) - even if packets travelled the same route between server and client, there would be variations in arrival times due to network load and other uncontrollable factors.
3. Error Correction - clients need to employ protocols to maximise the reliability of data transmission to deal with problems such as packet loss, corruption of data packets, and loss of order. These can involve further processing and possible retransmission, which result in delays which exacerbate the above problems.
4. Client Hardware - different client hardware can cause a given packet to be processed at different speeds by different clients. Also, different sound processors may have calibration errors resulting in up to 3% variation in playback speed.
5. Client Software - different operating systems and/or system configuration parameters and/or applications run in parallel with the voice client may cause further variations in replay speed and thus give rise to a lack of synchronisation of clients within earshot of one another.

An object of the present invention is to mitigate this problem.

According to a the invention there is provided a method as specified in the claims.

Methods for achieving multiparty synchronisation for real time network application have been described in US 5,682,384. However, these methods describe systems in which data from a plurality of sources arrives at a single destination station or client. The present invention concerns a different problem - that of lack of synchronisation where data from a single source arrives at a plurality of neighbouring destination stations or clients.

Embodiments of the invention will now be described, by way of example only, with reference to the accompanying schematic drawings, in which:-
Figure 1 shows flow diagram of a method according to the invention,
Figure 2 shows a block diagram of a client-server network, and
Figure 3 shows a further client -server network,

In computer networks using audio data, such as for example in dealing rooms, there are several forms of real time communications. They are:
Broadcast - point to many simplex communications, this is typically used to transfer information - e.g. "Pepsi have bought 3 extra bottling plants in the UK their share price is expected to go unchanged"
Intercom - typically point to point full duplex calls over ambient speakers, though typically the information is half duplex or question and answer - e.g. "What is the Dollar Franc rate?" or "Fred your visitor is in reception?"
Hoot and Holler - multipoint to multipoint conference, where again information is being disseminated and multiple people within a company will wish to communication to a large number of listeners around the world on the same subject. This is typically product related.

Although today most of the communication is simply voice only, the ability to communicate with the addition of real time video and associated data (files, research, documentation) is desirable.

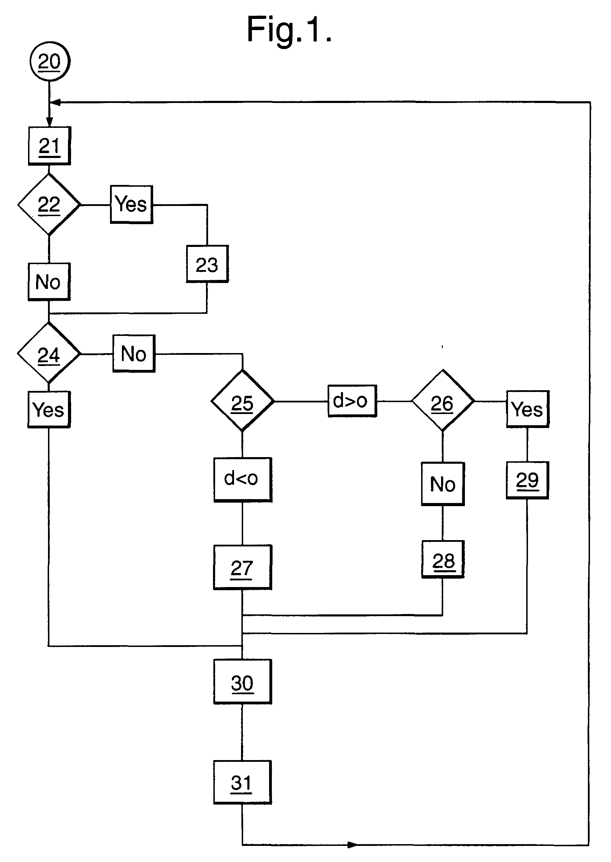

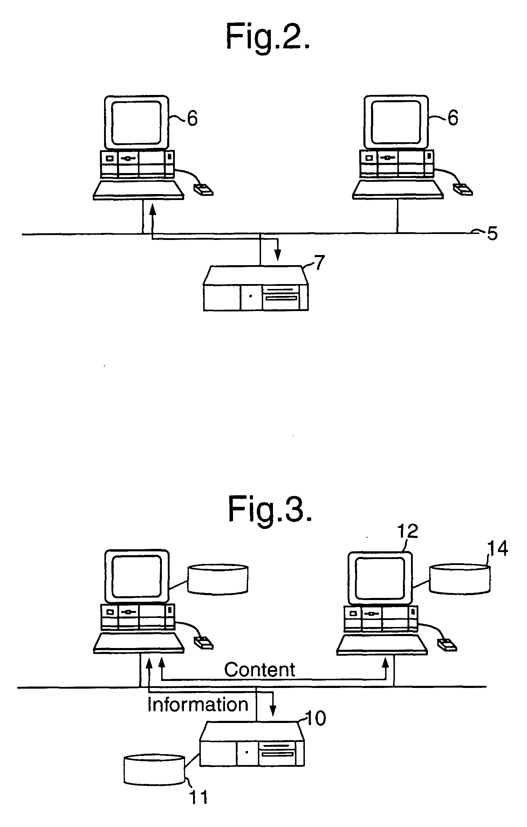

In order to implement efficient communications a central sever is used with Broadcasts and Hoots to combine any incoming voice and data streams and routes the combined streams to intended recipients. An example of a network topology allowing this functionality is shown in Figure 2. This figure shows a network backbone (5), such as for example an Ethernet cable, coupled to a plurality of workstation computers (6) and a server (7). This is a typical example of a client-server architecture. With such a network topology it would be normal practice to have the server (7) control the data traffic in an analogous way to the central exchange (2) shown in Figure 1, with the workstation computers (6) acting in an analogous way to the telephones (3) in Figure 1.

To generate an input to a broadcast or an existing hoot in a system as shown in Figure 2, each "push to talk" voice data stream (and any video or other data) is routed from the workstation to the server, which then broadcasts a combined hoot voice stream to predefined workstations. The server can conveniently store the combined stream for later replay.

In one example of such a system, described in our co-pending patent application number GB 9916871.8, the communication system has a first server function that keeps track of permissions and usage and a second server function that combines voice streams or other data streams for broadcast and which provides storage means for storing the same data streams. The system also comprises a plurality of workstation computers each of which exchanges data on its intercom usage with the first server function, but which sends the intercom voice stream directly to the other workstation computer. Each workstation computer includes data storage means for storing the intercom voice stream for that particular workstation, such that the first server function is both able to keep track of intercom usage and subsequently to arrange for playback at any authorised point of any intercom message. The first and second server functions may be combined in a single server, or may be provided by separate servers.

Figure 3 shows such a system in which both server functions are combined in a single server (10). This server has a part (11) which is allocated to store broadcast messages including audio data such as voice. The workstations (12) each have a data store (14) for storing intercom messages including audio data such as voice. It is within the scope of the present invention for each workstation to store any combination of its own outgoing and incoming intercom data streams. To reduce storage requirements, the two data streams may be combined, for example by summing the two channels and storing this summed data, or by using other forms of compression appropriate for the type of data.

The system implements broadcasts and hoots as follows. A person at a workstation computer (12) authorised to send such a message provides data to a routing server (10), usually in the form of data packets. These packets are combined into a single audio data stream at the server, which then sends the data stream out to a given subset of the workstations as a broadcast message, and stores this data in part 11. The broadcast message is then replayed by all the workstations participating in that particular hoot.

An example of an embodiment of a method according to the present invention is shown schematically in the flow diagram of Figure 1. The following discussion assumes that data corresponding to voice messages is sent in variable sized packets. The packets received at the destination station are identical to those sent from the source station, and the packets are received in the same order in which they were sent. If any of these conditions are not met, known techniques can be employed to minimise voice loss.

Block 20 denotes the start of the process. Block 21 denotes receiving a voice packet at a destination station over a network. Block 22 denotes deciding whether the received voice packet is the first of a voice spurt (i.e. the first packet in a connection or one preceded by non-voice packets). If it is the first, Block 23 denotes storing the time it was received as the "start time". Block 24 denotes deciding whether the voice packet has arrived at the expected time, or whether it is late or early. If it arrives at the expected time, or is the first packet of a voice spurt (received at the "start time"), then Block 30 denotes waiting, so that the packet is sent to the sound playing device (denoted by Block 31) with a predetermined delay time after the "start time". If the decision at Block 24 is that it has not arrived at the expected time, Block 25 denotes deciding whether it has arrived later (shown as d>0) or earlier (shown as d<0) than expected.

If it has arrived earlier than expected, in a conventional replay system it would just be delayed for a bit longer before replay. However, one possibility is that the "start time" for the destination station being considered was later than its neighbours due to routing or other delays. Under such conditions, neighbouring destination stations would start replaying the voice at different times. In the present invention, Block 27 denotes determining a corrected "start time", either by subtracting the amount of time by which the voice packet has arrived earlier than expected from the original "start time", or by calculating a mean or average "start time" to be used in place of the original "start time".

If the voice packet has arrived later than expected, but before it should be played, then it is placed in the queue with a shorter delay time. If the mean or average "start time" is being used rather than the minimum time, it must be recalculated, taking into account this longer arrival time. If a voice packet arrives later than it should have been played it is ignored. The travel times of packets arriving so late are not used to calculate the average travel time. It is important to have a sufficiently long delay that not many packets are ignored in this way.

The voice data is stored in a FIFO buffer prior to being sent to the sound replay device. Block 26 denotes deciding upon what to do when this buffer becomes empty of voice data (sometimes known as an undervoice condition). Block 29 denotes resetting the start time and waiting for a new voice spurt to begin. If the buffer is not empty, it is possible that it might become too full and over flow. If that happens, Block 28 denotes removing excess voice data. There are known techniques for performing this task, such as removing silences or playing the voice data faster in real time. Blocks 30 and 31 have the same meanings as before.

Apparatus for putting the present invention into effect can comprise a suitably programmed general purpose computer, including a sound card or other sound output means.

When the average travel time is being calculated, it is necesary to disregard very large travel times associated with lost data packets which would otherwise distort the average.

## Claims

1. A method of synchronising the replay of audio data sent as data packets in a network of computers, the audio data being sent from a source station to a plurality of destination stations within earshot of one another, each data packet setting out from the source station to respective destination stations at substantially the same time, each packet taking a travel time to reach its destination station, the travel times having a substantially random distribution over a range of times, the method including determining the average travel time of a packet, and providing a delay between the time a given packet is sent and its replay, the delay being adapted such that it corresponds to a time equal to said average travel time plus a constant time.

2. A method of synchronising the replay of audio data sent as data packets in a network of computers, the audio data being sent from a source station to a plurality of destination stations within earshot of one another, each data packet setting out from the source station to respective destination stations at substantially the same time, each packet taking a travel time to reach its destination station, the travel times having a distribution over a range of times, the method including determining the minimum travel time of a packet, and providing a delay between the time a given packet is sent and its replay, the delay being adapted to vary such that it corresponds to a time equal to said minimum travel time plus a constant time.

3. A method as claimed in any preceding claim in which the distribution is a normal distribution.

4. A method as claimed in any preceding claim in which the delay time is sufficiently long for several data packets to have arrived at the destination station before the value of the delay and/or average travel time and/or minimum travel time is computed.
